# EUROPÄISCHE PATENTSCHRIFT

(11) **EP 0 881 552 B1**
(45) Veröffentlichungstag und Bekanntmachung des Hinweises auf die Patenterteilung: **11.09.2002**
(21) Anmeldenummer: 98109472.5
(22) Anmeldetag: 25.05.1998
(51) Int. Cl.: G05B 19/12, G05B 19/4065

(54) **Vorrichtung und Verfahren zur Kennzeichnung und automatischen Identifikation und Klassifikation von Werkzeugen**
Method and device for characterising, automatically identifying and classifying tools
Méthode et dispositif de caractérisation, identification et classification automatiques d'outils

(30) Priorität: 27.05.1997 DE 19722121
(43) Veröffentlichungstag der Anmeldung: 02.12.1998
(73) Patentinhaber: WENDT GmbH, D-40670 Meerbusch (DE)
(72) Erfinder: Lamers, Norbert, Dipl.-Ing., 47445 Moers (DE)
(74) Vertreter: Groening, Hans Wilhelm, Dipl.-Ing.

(56) Entgegenhaltungen:
- EP-A- 0 404 275
- US-A- 4 820 962
- US-A- 4 856 177
- US-A- 4 900 252
- US-A- 5 014 794
- PATENT ABSTRACTS OF JAPAN vol. 011, no. 048 (M-561), 13. Februar 1987 (1987-02-13) & JP 61 209858 A (MITSUBISHI HEAVY IND LTD), 18. September 1986 (1986-09-18)

## Beschreibung

Die Erfindung betrifft eine Vorrichtung und ein Verfahren zur Kennzeichnung und automatischen Identifikation und Klassifikation von Werkzeugen nach dem Oberbegriff des Patentanspruchs 1. Eine solche Vorrichtung ist aus der US-A-4 900 252 bekannt.

Bei der Bearbeitung eines Werkstückes in Werkzeugmaschinen, zum Beispiel durch Schleifen, sind die Werkzeuge, etwa die Schleifscheiben, die in der Werkzeugmaschine zum Einsatz kommen, auf den jeweiligen Bearbeitungsschritt abgestimmt. Außerdem verschleißen die Werkzeuge oft recht schnell. Der durch diese beiden Faktoren bedingte oftmalige Werkzeugwechsel wird durch Schnellwechselsysteme erleichtert, die mit einer magnetischen Werkzeugbefestigung ausgestattet sein können (DE 22 61 014 C3, DE 33 42 199 A1).

Die Werkzeugmaschine läßt sich somit sehr schnell mit dem richtigen Werkzeug versehen. Eine numerisch gesteuerte Werkzeugmaschine muß jedoch auch "wissen", mit welchem Werkzeug sie bestückt ist und welche Eigenschaften dieses Werkzeug hat. Deshalb war es bisher erforderlich, eine Werkzeugnummer manuell einzutippen und die Werkzeugeigenschaften einzugeben, z.B. die zulässige Schnittgeschwindigkeit oder die Verschleißgrenze, was nicht nur relativ zeitaufwendig ist, sondern auch eine erhebliche Fehlerquelle darstellt.

Auf anderen Gebieten sind bereits die verschiedensten automatischen Kennzeichnungssysteme in Gebrauch, etwa die weit verbreiteten Strichcodeetiketten mit den dazugehörigen Strichcodelesern, die nach dem optischen Prinzip arbeiten, oder die Transponder, die berührungslos induktiv aktiviert und ausgelesen werden.

Auf dem Gebiet der Werkzeugmaschinen haben solche Kennzeichnungssysteme jedoch keine praktische Bedeutung erlangt. Optische Systeme sind generell verschmutzungsanfällig, und die Verwendung von Transpondern, das heißt von aufwendigen und teuren Bauteilen, in Verschleißteilen wie Werkzeugen macht wenig Sinn. Im übrigen führt die Anwendung von solchen Kodierungshilfsmitteln häufig zu einer unzulässig hohen Unwucht des schnell rotierenden Werkzeuges. Ein Auswuchten des Werkzeugs soll jedoch aus Kostengründen vermieden werden.

Die DE 35 18 902 beschreibt eine Vorrichtung zur Identifikation von Schleifscheiben, bei der der Schleifscheiben-Aufnahmeflansch, an dem die Schleifscheibe angebracht ist, eine Kodierung in Form von konzentrischen Rillen aufweist. An die Stirnseite des Schleifscheiben-Aufnahmeflansches mit den Rillen kann ein Lesegerät angelegt werden, das eine Anzahl von in radialer Richtung beabstandeten, mechanischen Mikroschaltern umfaßt, die das Vorhandensein oder Nichtvorhandensein sowie die Tiefe der Kodierungsrillen feststellen.

Diese Anordnung hat den Nachteil, daß die Rillen im Aufnahmeflansch sehr präzise eingearbeitet sein müssen, was aufwendig ist. Außerdem setzt das Einbringen von Rillen ein relativ hohes Zerspanungsvolumen voraus. Bei der Herstellung von Verschleißteilen führt das zu nicht tragbaren Kostenerhöhungen. Auch ist dieses System ähnlich wie die optischen Systeme empfindlich gegenüber Verschmutzungen.

Aus der DE 36 37 128 A1 ist eine Vorrichtung zum Identifizieren von rotierenden Werkzeugen, wie Bohrern, bekannt, welche die Merkmale der Oberbegriffe der Ansprüche 1 und 9 aufweist. Eine vollständige Signalauswertung ist hierbei jedoch nur möglich, wenn außer den Ausgangssignalen der Leseeinheit, die Informationen über die Anordnung der Kodierungselemente am Umfang des Werkzeuges enthalten, Zusatzinformationen bereitgestellt werden, welche einen Bezugspunkt am Werkzeug festlegen, um eine eindeutige Identifizierung und Klassifizierung des Werkzeuges zu ermöglichen. In einem Ausführungsbeispiel ist hierzu ein zusätzlicher Drehzahl-Istwertgeber vorgesehen, der die Drehzahl einer Motor- oder Getriebewelle zum Antrieb des Werkzeuges erfaßt, um während des Lesevorgangs der Kodierelemente eine Information über die momentane Position des Werkzeuges zu erhalten. Dies bedeutet, daß zusätzlich zur Leseeinheit ein weiterer Sensor erforderlich ist, dessen inkrementale Ausgangssignale in die Signalverarbeitung der vom Sensor der Leseeinheit abgegebenen Ausgangssignale miteingehen.

Der Erfindung liegt die Aufgabe zugrunde, ein verbessertes Verfahren und eine Vorrichtung zu schaffen, mit der ein eindeutiges Identifizieren und Klassifizieren eines rotierenden Werkzeuges unter Einsatz nur eines einzigen Sensors ermöglicht ist.

Diese Aufgabe ist erfindungsgemäß mit einer Vorrichtung nach Patentanspruch 1 und einem Verfahren nach Patentanspruch 9 gelöst.

Vorteilhafte Ausgestaltungen der Erfindung sind in den Unteransprüchen angegeben.

Durch Ermitteln desjenigen Kodierungselementes, welches das zuerst erfaßte Kodierungselement eines Kodierungselementepaares mit dem kleinsten Abstand darstellt, und durch Bestimmen dieses Kodierungselementes als Bezugs-Element, d. h. als Nullpunkt für die nachfolgende Zählung ist eine eindeutige Identifizierung und Klassifikation des Werkzeuges allein durch eine geschickte Auswertung der erfaßten Signale möglich, ohne daß dazu ein zusätzlicher Sensor, wie ein inkrementaler Drehzahlgeber erforderlich ist.

Bei der Anwendung der Erfindung bei einer Schleifscheibe und einer Schleifmaschine besteht die Kodierung vorzugsweise aus einer Anzahl von Bohrungen, die am Umfang des metallischen Schleifscheiben-Grundkörpers angebracht sind. Die Bohrungen sind in Umfangsrichtung in einem bestimmten Raster angeordnet. Dazu können z.B. die 360 Grad des Umfangs in gleichbleibende Abstände unterteilt sein. Die Information kann in einem unterschiedlichen Abstand der Bohrungen zum Ausdruck kommen oder in der Anzahl aufeinanderfolgender Bohrungen und dergl.. In jedem Fall ergibt sich mit relativ wenig Bohrungen (etwa sechs), die in einem relativ feinen Raster über den Umfang verteilt sind, eine große Anzahl von Kombinationsmöglichkeiten und damit ein hoher Informationsgehalt. Die große Anzahl von Kombinationen ist dabei die Folge der Verteilung der wenigen Bohrungen über die vielen möglichen Rasterpositionen.

Bezüglich der Feinheit und der Art der Rastereinteilung eröffnet die ohnehin genau gesteuerte Spindel einer Werkzeugmaschine viele Möglichkeiten.

Aus der Vielzahl der möglichen Kombinationen können diejenigen ausgewählt werden, die keine Unwucht oder nur eine geringe Unwucht des Werkzeugs (unterhalb eines vorgegebenen Grenzwertes) ergeben. Selbst wenn man nur die Kombinationen zuläßt, die zu keiner oder nur zu einer vernachlässigbaren Unwucht führen, reicht die Anzahl der verbleibenden Kombinationsmöglichkeiten für die Kodierung des Werkzeugs allemal aus. Gegebenenfalls können die Bohrungen auch symmetrisch zur Rotationsachse vorgesehen werden, das heißt, die Information kann zum Beispiel auf einem Halbkreis untergebracht und auf dem zweiten Halbkreis wiederholt werden.

Die Anzahl der Bohrungen ist vorteilhaft konstant. In diesem Fall können bei bekannter Drehzahl Lesefehler sehr leicht erkannt werden, weil aus dem Ablauf einer vorgegeben Zeit dann auf die Vollendung einer vollen Umdrehung geschlossen werden kann.

Das Vorhandensein einer Bohrung kann im einfachsten Fall durch einen ortsfesten, induktiven Näherungsschalter festgestellt werden, der in der Werkzeugmaschine (oder einer anderen Maschine wie einem Werkzeugabricht- oder Schärfgerät) in der Nähe der Schleifscheibe angebracht ist. Solche Näherungsschalter sind sehr robuste Bauteile, die einfach aufgebaut und billig sind. Der Lesevorgang erfolgt, während sich das Werkzeug dreht und sich die Bohrungen an dem einen Näherungsschalter vorbeibewegen. Spätestens nach einer vollständigen Umdrehung des Werkzeuges ist die Information vom Werkzeug abgelesen. Dieses Ablesen erfolgt vorzugsweise bei einer relativ langsamen Umdrehung des Werkzeugs, bevor die Arbeit an der Maschine aufgenommen wird.

Statt Bohrungen können von dem induktiven Näherungsschalter auch Nocken, Nuten und Einsätze aus einem nicht ferromagnetischen Material am Umfang des Werkzeugs erfaßt werden.

Statt des induktiven Näherungsschalters können andere, optisch, elektrisch oder magnetisch bzw. elektrooptisch usw. arbeitende Sensoren als Leseeinheit verwendet werden. Das Lesegerät muß nur in der Lage sein, die am Werkzeug angebrachten Markierungen bei der Vorbeibewegung des Werkzeugs nacheinander zu erfassen.

Das erfindungsgemäße Kennzeichnungssystem ist besonders bei Werkzeugen und Werkzeugmaschinen mit einem Schnellwechselsystem, eventuell einem mit magnetischer Halterung, von Vorteil, da der Werkzeugtyp nicht mehr manuell in die Maschine eingegeben werden muß. Der Austausch des Werkzeuges wird dadurch nicht nur beschleunigt, sondern es werden auch Eingabefehler vermieden.

Insgesamt ist die erfindungsgemäße Vorrichtung fertigungstechnisch sehr einfach. Am Werkzeug sind keine größeren Modifikationen erforderlich, und die Leseeinheit ist klein und robust und kann ohne größeren Aufwand an der Werkzeugmaschine angebracht werden.

Ein Ausführungsbeispiel der erfindungsgemäßen Vorrichtung und das Arbeiten nach einem erfindungsgemäßen Verfahren werden im folgenden anhand der Zeichnungen näher erläutert. Es zeigen:
**Fig. 1** einen Schnitt durch eine Topfschleifscheibe mit einer Kodierungsbohrung und einem Sensor zum Erfassen der Bohrung; **Fig. 2** eine Draufsicht auf den Grundkörper der Topfschleifscheibe mit den Kodierungsbohrungen am Umfang des Grundkörpers;
**Fig. 3** ein Flußdiagramm für die Verarbeitung der erfaßten Kodierungsdaten und
**Fig. 4** ein Flußdiagramm zum Bestimmen einer praktisch unwuchtfreien Anordnung der Kodierelemente an der Topfschleifscheibe.

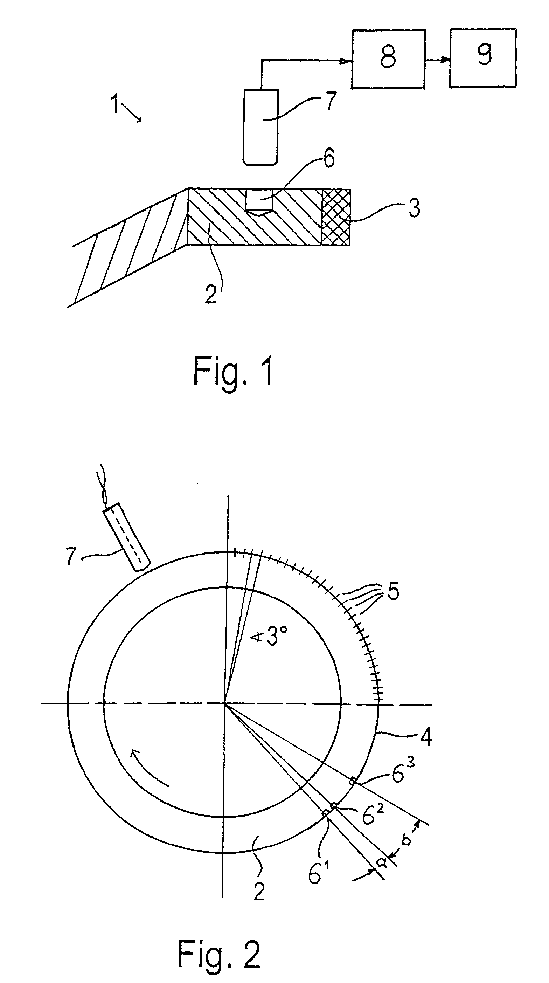

Die Fig. 1 der Zeichnung zeigt vergrößert eine Topfschleifscheibe 1 im Schnitt. Die Schleifscheibe 1 sitzt auf einem (nur teilweise gezeigten) Flansch mit einer (nicht gezeigten) Nabe zum Anbringen an einer Werkzeugmaschine. Die Schleifscheibe 1 besteht aus einem Grundkörper 2, auf dessen Stirnseite ein Schleifbelag 3 aufgebracht ist. Der Grundkörper 2 besteht aus einem metallischen, d.h. ferromagnetischen Material, meist aus Stahl. Die Schleifscheibe 1 stellt einen Rotationskörper der, der sich im Betrieb um die in der Nabe liegende Werkzeugachse dreht.

Auf dem Grundkörper 2 ist, wie in der Ansicht der Fig. 2 gezeigt, ein kreisförmiges Raster vorgesehen. Ein Grundkreis 4 des Rasters liegt auf dem äußeren Umfang des Grundkörpers 2. Die einzelnen Rasterpunkte 5 des Rasters werden durch Unterteilung des Grundkreises 4 in gleiche Winkelabstände von zum Beispiel 3 Grad gebildet. Die Rasterpunkte 5 sind je nach der aufzunehmenden Information mit einer Sackbohrung 6 versehen oder auch nicht. Der Durchmesser der Bohrungen 6 ist auf die Abstände der Rasterpunkte 5 abgestimmt. Da die Rasterung relativ fein ist, haben die Bohrungen 6 dementsprechend auch nur einen relativ geringen Durchmesser.

Die Unterteilung des Grundkreises 4 und der Durchmesser der Bohrungen 6 sind natürlich auch auf das Auflösungsvermögen der Leseeinheit abgestimmt, die an der Werkzeugmaschine angebracht ist, um die Markierungen auf dem Raster abzutasten.

Der Grundkreis 4 und die Rasterpunkte 5 stellt bzw. stellen natürlich nur einen ideellen Kreis bzw. ideelle Punkte dar, der bzw. die nicht körperlich auf dem Grundkörper 2 ausgeführt werden. Nur die Bohrungen 6 werden auf dem Grundkörper 2 auch tatsächlich ausgeführt und sind am äußeren Umfang des fertigen Werkzeugs sichtbar und erfaßbar.

Statt der Bohrungen 6 können an den entsprechenden Rasterpunkten 5 auch Nuten in den Grundkörper 2 eingefräst oder eingeschliffen werden. Alternativ können auch Nocken am Grundkörper 2 angebracht werden oder generell in der Form von Markierungen solche Materialien, die sich in einer Eigenschaft, die die Leseeinheit erfassen kann, vom Grundkörper unterscheiden.

Die Bohrungen 6 oder alternativ die Nuten oder Nocken werden so über den Grundkreis verteilt, daß sich keine Unwucht ergibt oder daß sich eine Unwucht innerhalb vorgegebener Grenzen hält. Das heißt, daß von den möglichen Kombinationen der Verteilung einer bestimmten Anzahl von Bohrungen über die Rasterpunkte für die zu speichernde Information nur diejenigen Kombinationen ausgewählt werden, die diese Bedingung erfüllen.

Zur Darstellung der Information kann eine bestimmte Anzahl von Bohrungen, zum Beispiel sechs, nach einem vorher bestimmten Kodierschema über die Rasterpunkte verteilt werden. Das Kodierschema kann von einer festen oder einer variablen Anzahl Bohrungen ausgehen. Es kann ein binäres Kodierschema (Bohrung ist vorhanden = 1, keine Bohrung vorhanden = 0 oder ähnlich) angewendet werden oder auch eines, das auf den Abständen der Bohrungen beruht.

An der Werkzeugmaschine ist gegenüber dem Grundkreis 4 des Grundkörpers 2 als Leseeinheit bzw. Sensor ortsfest ein induktiver Näherungsschalter 7 angebracht. Der Näherungsschalter 7 arbeitet berührungsfrei, das heißt er wird vom Grundkörper 2 in einem Abstand gehalten.

Wenn sich die Schleifscheibe 1 am Näherungsschalter 7 vorbeibewegt, erfaßt der Näherungsschalter 7 die einzelnen Bohrungen 6. Das heißt, das Signal vom Näherungsschalter 7 gibt Aufschluß darüber, ob sich an den einzelnen Rasterpunkten 5 eine Bohrung 6 befindet oder nicht, bzw. welchen Abstand die einzelnen Bohrungen entlang des Umfanges der Schleifscheibe 1 haben. Dazu wird vorzugsweise die Schleifscheibe 1 mit einer bestimmten, geringen Geschwindigkeit am Näherungsschalter 7 vorbeigedreht.

An den Sensor bzw. den Näherungsschalter 7 ist eine elektronische Verarbeitungseinheit 8 angeschlossen, die das Signal des Sensors erfaßt und zu einem Ausgangssignal aufbereitet, welches eine eindeutige Identifikation und Klassifikation der Schleifscheibe in einer nachgeschalteten Steuerelektronik 9 der Werkzeugmaschine ermöglicht. Die Verarbeitungseinheit 8 kann gesondert vorgesehen oder unmittelbarer Bestandteil einer entsprechend programmmierten Steuereinheit der Werkzeugmaschine sein.

Für die Signalaufnahme durch den Sensor oder Näherungsschalter 7 wird somit die Schleifscheibe nach einem Austausch eine oder einige wenige Umdrehungen langsam gedreht, bis das Signal eindeutig erfaßt ist. Die Kodierung ist dabei vorzugsweise derart, daß der Ausgangspunkt der Erfassung beliebig ist bzw. vom System erkannt werden kann. Vor der Aufnahme der Arbeit mit dem Werkzeug werden damit alle relevanten Parameter des Werkzeugs auf die Werkzeugmaschine übertragen, ohne daß irgendwelche Größen manuell oder automatisch einzugeben sind.

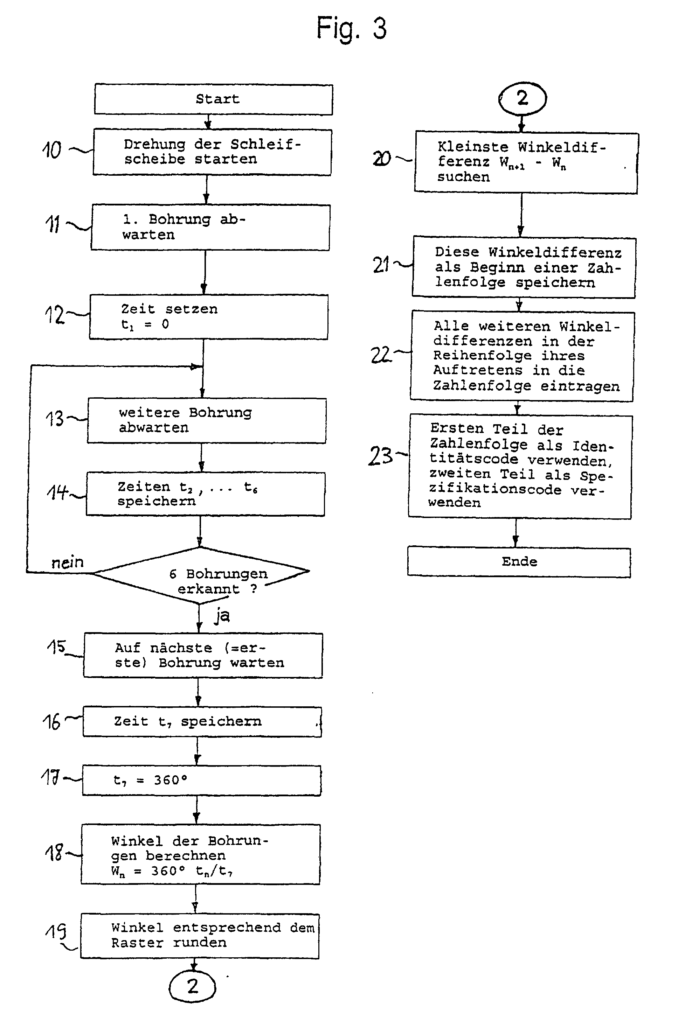

In Figur 3 ist die Verfahrensweise zum Identifizieren und Klassifizieren einer Schleifscheibe in Form eines Flußdiagramms dargestellt. Nach dem Start wird in einem ersten Schritt 10 eine neue Schleifscheibe vor Beginn eines Schleifvorganges in niedrige, konstante Drehung versetzt, wobei die Größe dieser Drehzahl nicht bekannt zu sein braucht, jedoch vorteilhaft kleiner als die Betriebsdrehzahl zu halten ist. In einem Schritt 11 wird solange abgewartet, bis die erste Bohrung der Bohrungen 6¹ bis 6ⁿ von der Leseeinheit erfaßt wird. Im Schritt 12 wird eine Zeit t₁ = 0 zum Erfassungszeitpunkt dieser ersten Bohrung gesetzt.

Im Schritt 13 wird abgewartet, bis die nächstfolgende Bohrung von der Leseeinheit 7 erfaßt wird usw. Im Schritt 14 werden die Zeiten t₂, t₃ ... gespeichert, zu denen je eine Bohrung von der Leseeinheit erfaßt wurde. Dann wird in Schritt 15 abgefragt, ob sämtliche Bohrungen, im vorliegenden Fall sechs Bohrungen, erkannt worden sind. Falls dies nicht der Fall ist, werden die Schritte 13 und 14 erneut wiederholt. Falls sämtliche Bohrungen erkannt sind, wird auf die nächste Bohrung, das heißt erneut auf die im Schritt 11 erfaßte erste Bohrung gewartet und in Schritt 16 der Zeitpunkt t₇ der Erfassung dieser Bohrung gespeichert und in Schritt 17 als der Zeitpunkt einer vollständigen Umdrehung der Schleifscheibe um 360° vermerkt.

Im Schritt 18 wird in der Verarbeitungseinheit 8 der Winkel der Bohrungen nach der Beziehung Wₙ = 360° tₙ/t₇ berechnet. Im Schritt 19 werden die berechneten Winkel, die mit Ungenauigkeiten behaftet sein können, auf dem Raster gerundet, auf dem auch die Bohrungen liegen und der eine Winkelunterteilung von Schritten von beispielsweise 2° aufweisen kann.

Im Schritt 20 wird die kleinste Winkeldifferenz a = Wₙ₊₁ - Wₙ gesucht, die bei dem Ausführungsbeispiel nach Fig. 2 beispielsweise zwischen den Bohrungen 6¹ und 6² angenommen sei.

Diese kleinste Winkeldifferenz wird als Beginn einer Zahlenfolge im Schritt 21 gespeichert. Im nachfolgenden Schritt 22 werden alle weiteren Winkeldifferenzen in der Reihenfolge ihres Auftretens in die Zahlenfolge eingetragen.

Schließlich werden im Schritt 23 der erste Teil dieser Zahlenfolge als Identitätscode verwendet, während der zweite Teil als Spezifikationscode verwendet wird.

Bei der beschriebenen Ausführung sind als Kodierungselemente, wie schon beschrieben, Bohrungen 6¹, 6², ... 6ⁿ in den Umfangsrand der Topfschleifscheibe 1 eingebracht, wobei vorteilhaft sechs Bohrungen insgesamt über den Umfang mit unterschiedlichen Winkelabständen voneinander eingebracht sind. Um die Relationen zu verdeutlichen, seien beispielhaft bei einem Schleifscheibendurchmesser von 400 mm die Abmessungen der Bohrungen jeweils mit einem Durchmesser von 5 mm und einer Tiefe von 2 mm angegeben. Diese Bohrungen sind, wie gesagt, sämtlich auf einem Raster mit einer Winkelunterteilung von beispielsweise 2° oder einem beliebigen Vielfachen davon angeordnet.

Beim Herstellen der Bohrungen muß vermieden werden, daß eine unzulässige Unwucht der Schleifscheibe erzeugt wird. Die hierzu geforderte Wuchtgüte ist durch VDI-Richtlinie 2060 mit dem Wert Q1 festgelegt. In dieser Richtlinie sind auch allgemeine Angaben zum Ermitteln der Unwucht einschließlich Formeln dargestellt.

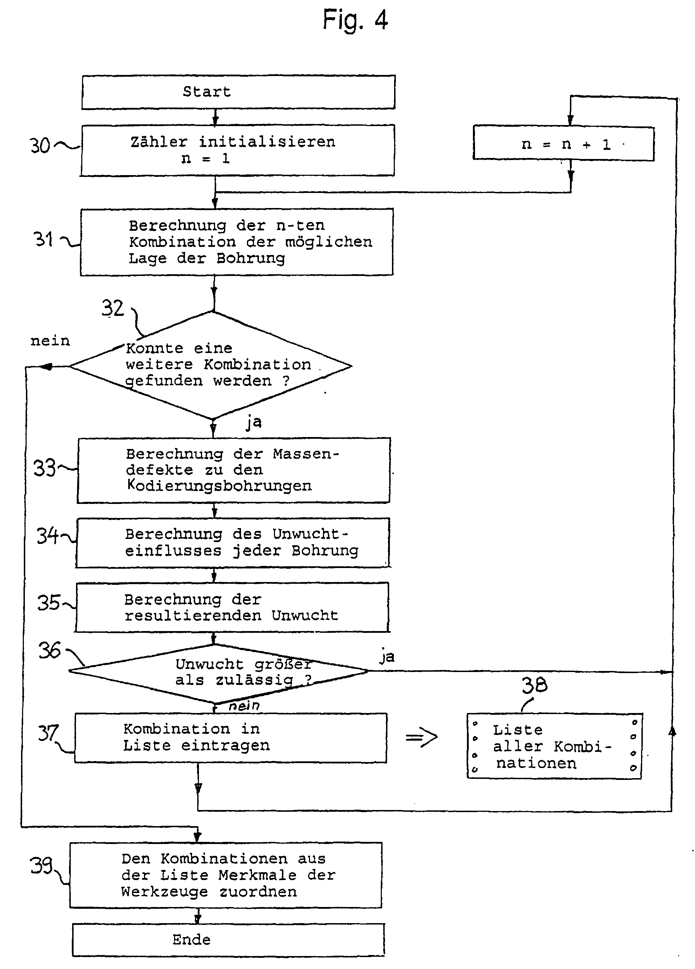

In Fig. 4 ist nun ein iteratives numerisches Verfahren in Form eines Flußdiagrammes angegeben, welches die richtige Plazierung der Bohrungen an der Schleifscheibe 1 auf einem vorgegebenen Raster ermöglicht.

In einem Schritt 30 wird zunächst ein Zähler initialisiert. Darauf wird in einem Schritt 31 die erste von n Kombinationen der möglichen Lage der Bohrungen berechnet. In einem Schritt 32 wird abgefragt, ob eine weitere Kombination gefunden werden konnte. Wenn dies zutrifft, so werden im Schritt 33 die Massendefekte der einzelnen Bohrungen, im Schritt 34 die Unwuchteinflüsse jeder Bohrung und im Schritt 35 die resultierenden Unwuchten berechnet. Wenn in der Abfrage 36 festgestellt wird, daß die Unwucht größer als zulässig ist, wird nach Erhöhung der Zykluszahl n auf n + 1 an eine Stelle des Programmes vor den Schritt 31 zurückgesprungen und es werden die Schritte 31 bis 36 wiederholt, und zwar solange, bis in der Abfrage gemäß Schritt 36 festgestellt wird, daß die Unwucht nicht mehr unzulässig groß ist. Danach wird gemäß Schritt 37 die gefundene zulässige Kombination in eine Liste 38 eingetragen und es wird erneut nach Erhöhen der Zykluszahl in das Programm vor Block 31 zurückgesprungen, bis schließlich in der Abfrage 32 festgestellt wird, daß eine weitere Kombination nicht gefunden werden konnte. Nach Zuordnung der Kombinationen aus der inzwischen vervollständigten Liste 38 zu Merkmalen der Werkzeuge im Schritt 39 ist der Rechenvorgang beendet.

Mit der Berechnung gemäß Fig. 4 ist es möglich, die Schwerpunktlage der mit den Bohrungen 6¹, 6², ... 6ⁿ versehenen Schleifscheibe für jede denkbare Kombination von Lagen der Bohrungen iterativ zu berechnen. Es werden diejenigen Kombinationen ermittelt und in die Liste 38 eingetragen, die nicht zur Überschreitung der zulässigen Unwucht führen. Nach Beendigung der Rechnung lassen sich jeder zulässigen Kombination Merkmale der Schleifscheiben zuordnen.

Bei der in den Figuren 1 und 2 gezeigten Ausführungsform liegt der Grundkreis 4 für die Rasterpunkte 5 auf dem äußeren Umfang des Grundkörpers 2 der Schleifscheibe 1, und die Mittelachsen der Bohrungen 6 verlaufen in radialer Richtung senkrecht zur Drehachse der Schleifscheibe 1. Der Grundkreis für das Raster der Bohrungen kann jedoch auch auf dem Flansch der Schleifscheibe 1 liegen, wobei die Mittelachse der Bohrungen 6 dann nicht mehr senkrecht zur Drehachse der Schleifscheibe 1 verläuft.

Die erfindungsgemäße Kodierung kann natürlich auch bei Schleifscheiben angewendet werden, die anders als gezeigt geformt sind. Bei Schleifscheiben zum Beispiel mit einem Flansch, der sich in einer zur Drehachse senkrechten Ebene erstreckt und bei denen der Schleifbelag direkt auf den Flansch aufgebracht ist, kann der Grundkreis für das Raster auf dem äußeren Umfang des Flansches liegen oder auch auf der gegebenenfalls freien Unter- oder Oberseite des Flansches. Im letzteren Fall liegen dann die Bohrungen auf einem Kreis um die Drehachse, und die Mittelachsen der Bohrungen erstrecken sich in axialer Richtung parallel zur Drehachse.

Schließlich läßt sich die erfindungsgemäße Kodierung generell an jedem rotierenden Werkzeug anbringen, nicht nur an Schleifscheiben, sondern z.B. auch an Bohrern, Fräsern usw.

## Patentansprüche

1. Vorrichtung zur Kennzeichnung und automatischen Identifikation und Klassifikation von rotierenden Werkzeugen, insbesondere Schleifscheiben mit Kodierungselementen (6), die am Werkzeug (1) in einem vorgegeben radialen Abstand von der Werkzeugachse in Umfangsrichtung aufeinander folgend angeordnet sind und bei der Rotation des Werkzeugs von einer ortsfesten Leseeinheit (7) nacheinander elektronisch erfaßt werden, deren Ausgangssignale in eine Verarbeitungseinheit (8) eingespeist werden, wobei mehr als zwei Kodierungselemente (6¹, 6², ... 6ⁿ) in einem Raster am Werkzeug angeordnet sind und nur eine einzige, durch den Sensor des Lesegerätes (7) und die Kodierungselemente (6¹, 6², ... 6ⁿ) gebildete Datenerfassungseinrichtung vorgesehen ist, welche als Quelle für aktuelle Eingangsdaten in die Verarbeitungseinheit (8) dient, **dadurch gekennzeichnet, daß** die Kodierungselemente (6¹, 6², ... 6ⁿ) in unterschiedlichen Umfangsabständen voneinander angeordnet sind und daß die Verarbeitungseinheit (2) eine Vorrichtung aufweist, welche die Unterschiedlichen Umfungsabstände in Form von Differenzwinkeln ermittelt.

2. Vorrichtung nach Anspruch 1, **dadurch gekennzeichnet, daß** dasjenige Kodierungselement (6¹), welches den kleinsten Umfangswinkel (a) mit dem in Rotationsrichtung nächstfolgenden Kodierungselement (6²) einschließt, in der Verarbeitungseinheit (8) numerisch ermittelt wird und als Bezugs-Kodierungselement dient.

3. Vorrichtung nach Anspruch 1 oder 2, **dadurch gekennzeichnet, daß** die Leseeinheit (7) an einer Werkzeugmaschine angebracht ist, in die das Werkzeug (1) eingesetzt wird.

4. Vorrichtung nach einem der Ansprüche 1 bis 3, **dadurch gekennzeichnet, daß** die Kodierungselemente Bohrungen (6) am Umfang des rotierenden Werkzeugs (1) sind.

5. Vorrichtung nach Anspruch 4, **dadurch gekennzeichnet, daß** die Anzahl der Bohrungen (6¹, 6², ... 6ⁿ) konstant ist und in einem Bereich zwischen 5 und 10 Bohrungen liegt, vorzugsweise sechs Bohrungen umfaßt.

6. Vorrichtung nach einem der Ansprüche 4 oder 5, **dadurch gekennzeichnet, daß** die Bohrungen (6¹, 6², ... 6ⁿ) so um den Umfang des Werkzeugs verteilt sind, daß keine unzulässige Unwucht entsteht.

7. Vorrichtung nach einem der Ansprüche 1 bis 6, **dadurch gekennzeichnet, daß** die Leseeinheit ein induktiver Näherungsschalter (7) ist.

8. Vorrichtung nach Anspruch 1, **gekennzeichnet durch** ein Schnellwechselsystem für das Werkzeug (1), insbesondere mit magnetischer Halterung.

9. Verfahren zur Kennzeichnung und automatischen Identifikation und Klassifikation von rotierenden Werkzeugen, insbesondere Schleifscheiben, mit Kodierungselementen (6), die am Werkzeug (1) in einem vorgegebenen radialen Abstand von von der Werkzeugachse in Umfangsrichtung aufeinander folgend angeordnet und bei einer Drehung des Werkzeuges von einer ortsfesten Leseeinheit nacheinander elektronisch erfaßt und verarbeitet werden, wobei mehr als zwei Kodierungselemente (6¹, 6², ... 6ⁿ) an dem Werkzeug vorgesehen werden, das Werkzeug vor dem vor dem ersten Arbeitseinsatz um einen solchen Winkel verdreht wird, daß sämtliche Kodierungselemente (6¹, 6², 6ⁿ) an der Leseeinheit vorbeibewegt und von die-ser erfaßt werden, und die Ausgangssignale der Leseeinheit (7) einer Verarbeitungseinheit (8) zugeführt werden, **dadurch gekennzeichnet daß** die Kodierungselemente (6¹,6²... 6⁴) in unterschiedlichen Umfangsabständen voneinander Ingeordnet sind, daß in der Verarbeitungseinheit (8) die unterschiedlichen Umfangsabstande in Form von Differenzwinkeln ermittelt werden und dasjenige Kodierungselementepaar (6¹, 6²) mit dem kleinsten Umfangsabstand (a) ausgewählt wird und daß von diesem Kodierungselementepaar dasjenige Kodierungselement (61) als Bezugs-Kodierungselement bestimmt wird, welches bei der Werkzeugdrehung zuerst an der Leseeinheit (7) vorbeibewegt wird.

10. Verfahren nach Anspruch 9, **dadurch gekennzeichnet, daß** der Verarbeitungseinheit (8) als Eingangsdaten ausschließlich die Ausgangsdaten des Lesegerätes (7) zugeführt werden.

11. Verfahren nach Anspruch 9 oder 10, **dadurch gekennzeichnet, daß** die Kodierungselemente (6¹, 6², ... 6ⁿ) so bemessen und um den Umfang des Werkzeuges verteilt angeordnet werden, daß keine unzulässige Unwucht entsteht.

12. Verfahren nach einem der Ansprüche 9 bis 11, **dadurch gekennzeichnet, daß** das Werkzeug mit kleinerer Drehzahl als im Arbeitsbetrieb um mindestens eine Umdrehung gedreht wird, daß die kleinste Winkeldifferenz (a) aufgesucht wird und daß das den Anfang dieser Winkeldifferenz markierende Kodierungselement (6¹) als Startpunkt für den Beginn einer Zählfolge mit den nachfolgenden Winkeldifferenzen gesetzt und alle weiteren Winkeldifferenzen in der Reihenfolge jedes Auftretens in eine Liste eingetragen werden.

13. Verfahren nach Anspruch 12, **dadurch gekennzeichnet, daß** die ermittelten Differenzwinkel (a, b) abgestimmt auf das Raster gerundet werden.

## Claims

1. Device for distinguishing and automatically identifying and classifying rotating tools, in particular grinding wheels with coding elements (6) which are arranged, one after the other in the circumferential direction, on the tool (1) at a prescribed radial distance from the axis of the tool and are successively electronically sensed by a fixed reading unit (7) during the rotation of the tool, the output signals of which reading unit (7) are fed into a processing unit (8), in which more than two coding elements (6¹, 6², ... 6ⁿ) are arranged on the tool with a pitch spacing, and only a single data sensing device which is formed by the sensor of the reading unit (7) and the coding elements (6¹, 6², ... 6ⁿ) and which serves as source for data currently input into the processing unit (8) is provided, **characterized in that** the coding elements (6¹, 6², ... 6ⁿ) are arranged at different circumferential distances from one another, and **in that** the processing unit (8) has a device which determines the different circumferential distances in the form of differential angles.

2. Device according to Claim 1, **characterized in that** that coding element (6¹) which encloses the smallest circumferential angle (a) with the coding element (6²) which directly follows it in the direction of rotation is numerically determined in the processing unit (8) and serves as a reference coding element.

3. Device according to Claim 1 or 2, **characterized in that** the reading unit (7) is attached to a machine tool into which the tool (1) is inserted.

4. Device according to one of Claims 1 to 3, **characterized in that** the coding elements are drilled holes (6) on the circumference of the rotating tool (1).

5. Device according to Claim 4, **characterized in that** the number of drilled holes (6¹, 6², ... 6ⁿ) is constant and lies in a range between 5 and 10 drilled holes, and preferably comprises six drilled holes.

6. Device according to one of Claims 4 or 5, **characterized in that** the drilled holes (6¹, 6², ... 6ⁿ) are distributed about the circumference of the tool in such a way that no undesired unbalance is produced.

7. Device according to one of Claims 1 to 6, **characterized in that** the reading unit is an inductive proximity switch (7).

8. Device according to Claim 1, **characterized by** a rapid-change system for the tool (1), in particular with magnetic mount.

9. Method for distinguishing and automatically identifying and classifying rotating tools, in particular grinding wheels, with coding elements (6) which are arranged, one after the other in the circumferential direction, on the tool (1) at a prescribed radial distance from the axis of the tool and are successively electronically sensed and processed during a rotation of the tool by a fixed reading unit, in which more than two coding elements (6¹, 6², ... 6ⁿ) are provided on the tool, the tool is rotated before its first use through such an angle that all the coding elements (6¹, 6², 6ⁿ) are moved past the reading unit and are sensed by it, and the output signals of the reading unit (7) are fed to a processing unit (8), **characterized in that** the coding elements (6¹, 6², ... 6ⁿ) are arranged at different circumferential distances from one another, **in that**, in the processing unit (8), the different circumferential distances are determined in the form of differential angles and that pair of coding elements (6¹, 6²) with the smallest circumferential interval (a) is selected, and **in that**, from this pair of coding elements, that coding element (6¹) which moves past the reading unit (7) first during the rotation of the tool is determined as the reference coding element.

10. Method according to Claim 9, **characterized in that** the processing unit (8) is supplied exclusively with the output data of the reading unit (7) as input data.

11. Method according to Claim 9 or 10, **characterized in that** the coding elements (6¹, 6², ...6ⁿ) are dimensioned and arranged distributed about the circumference of the tool in such a way that no unacceptable unbalance is produced.

12. Method according to one of Claims 9 to 11, **characterized in that** the tool is rotated through at least one rotation at a lower rotational speed than during working mode, **in that** the smallest angular difference (a) is searched for, and **in that** the coding element (6¹) which marks the start of this angular difference is set as the starting point for the start of a numerical sequence with the following angular differences, and all the further angular differences are entered in the sequence of each occurrence in a list.

13. Method according to Claim 12, **characterized in that** the differential angles (a; b) which are determined are rounded with adjustment to the pitch spacing.

## Revendications

1. Dispositif la caractérisation et l'identification et la classification automatiques d'outils rotatifs, notamment de meules, comportant des éléments de codage (6), qui sont disposés successivement dans la direction circonférentielle sur l'outil (1) à une distance radiale prédéterminée de l'axe de l'outil et qui, lors de la rotation de l'outil, sont détectés successivement par voie électronique par une unité de lecture fixe (7), dont les signaux de sortie sont envoyés à une unité de traitement (8), et dans lequel plus de deux éléments de codage (6¹, 6², ... 6ⁿ) sont disposés selon un réseau sur l'outil et il n'est prévu qu'un seul dispositif de détection de données, formé par le capteur de l'appareil de lecture (7) et les éléments de codage (6¹, 6², ... 6ⁿ) et qui est utilisé en tant que source pour des données réelles d'entrée dans l'unité de traitement (8), **caractérisé en ce que** les éléments de codage (6¹,6², ... 6ⁿ) sont disposés à des distances circonférentielles différentes et que l'unité de traitement (8) comporte un dispositif qui détermine les distances périphériques différentes sous la forme de différences angulaires.

2. Dispositif selon la revendication 1, **caractérisé en ce que** l'élément de codage (6¹), qui fait l'angle périphérique le plus faible avec l'élément de codage (6²), immédiatement suivant dans le sens de rotation, est déterminé numériquement dans l'unité de traitement (8) et est utilisé en tant qu'élément de codage de référence.

3. Dispositif selon la revendication 1 ou 2, **caractérisé en ce que** l'unité de lecture (7) est montée sur une machine-outil, dans laquelle l'outil (1) est installé.

4. Dispositif selon l'une des revendications 1 à 3, **caractérisé en ce que** les éléments de codage sont des perçages (6) situés sur la périphérie de l'outil rotatif (1).

5. Dispositif selon la revendication 4, **caractérisé en ce que** le nombre des perçages (6¹,6²,... 6ⁿ) est constant et se situe dans une gamme comprise entre 5 et 10 perçages, et est égal de préférence à six perçages.

6. Dispositif selon l'une des revendications 4 ou 5, **caractérisé en ce que** les perçages (6¹, 6², ... 6ⁿ) sont répartis sur la périphérie de l'outil de telle sorte qu'il n'apparaît aucun balourd inadmissible.

7. Dispositif selon l'une des revendications 1 à 6, **caractérisé en ce que** l'unité de lecture est un interrupteur inductif de proximité (7).

8. Dispositif selon la revendication 1, **caractérisé par** le système de changement rapide pour l'outil (1), notamment avec un dispositif de retenue magnétique.

9. Procédé de caractérisation et d'identification et de classification automatiques d'outils rotatifs, notamment de meules, comportant des éléments de codage (6), qui sont disposés sur l'outil (1) successivement de manière à se suivre dans la direction circonférentielle à une distance radiale prédéterminée, à une distance prédéterminée de l'axe de l'outil, et, dans le cas d'une rotation de l'outil, sont détectés et traités successivement électroniquement par l'unité de lecture fixe, et selon lequel plus de deux éléments de codage (6¹, 6², ... 6n) sont prévus sur l'outil, on fait tourner l'outil devant le premier insert de travail sur un angle tel que tous les éléments de codage (6¹, 6², ... 6ⁿ) passent devant l'unité de lecture et sont détectés par cette dernière, et que les signaux de sortie de l'unité de lecture (7) sont envoyés à l'unité de traitement (8), **caractérisé en ce que** les éléments de codage (6¹, 6², ... 6ⁿ) sont disposés à des distances circonférentielles différentes les uns des autres, que dans l'unité de traitement (8), les différentes distances circonférentielles sont déterminées sous la forme de différences angulaires et que la paire (6¹, 6²) d'éléments de codage est sélectionnée avec la distance circonférentielle (a) la plus petite, et que parmi cette paire d'éléments de codage, l'élément de codage (6¹), qui se déplace en premier lors de la rotation de l'outil, devant l'unité de lecture, est déterminé comme étant l'élément de codage de référence.

10. Procédé selon la revendication 9, **caractérisé en ce que** les données de sortie de l'appareil de lecture (7) exclusivement sont envoyées en tant que données d'entrée à l'unité de traitement (8).

11. Procédé selon la revendication 9 ou 10, **caractérisé en ce que** les éléments de codage (6¹, 6², ... 6n) sont dimensionnés et disposés d'une manière répartie sur la périphérie de l'outil de telle sorte qu'il n'appa-raît aucun balourd inadmissible.

12. Procédé selon l'une des revendications 9 à 11, **caractérisé en ce que** l'outil est entraîné en rotation avec une vitesse de rotation plus faible que dans le fonctionnement de travail, sur au moins une rotation, que la différence angulaire la plus faible (a) est recherchée et que l'élément de codage (61), qui marque le début de cette différence angulaire, est utilisé comme point de référence pour le début d'une suite de comptage avec les différences angulaires suivantes, et que toutes les autres différences angulaires sont insérées, selon la séquence de chaque apparition, dans une liste.

13. Procédé selon la revendication 12, **caractérisé en ce que** les différences angulaires déterminées (a,b) sont arrondies d'une manière accordée sur le réseau.
